# FASCICULE DE BREVET EUROPEEN

(11) **EP 3 079 840 B1**
(45) Date de publication et mention de la délivrance du brevet: **22.07.2020**
(21) Numéro de dépôt: 14828451.6
(22) Date de dépôt: 09.12.2014
(51) Int. Cl.: C02F 11/00, C02F 1/461, C02F 103/10, B09C 1/08, E02D 3/11

(54) **GÉOCOMPOSITE POUR LE TRAITEMENT DES SOLS, SYSTÈME POUR LE TRAITEMENT DES SOLS ET PROCÉDÉ DE CONSOLIDATION DE SOLS UTILISANT UN TEL GÉOCOMPOSITE.**
GEOVERBUNDSTOFF FÜR BODENBEHANDLUNG, BODENBEHANDLUNGSSYSTEM UND BODENVERFESTIGUNGSVERFAHREN MIT SOLCHEM GEOVERBUNDSTOFF.
GEOCOMPOSITE FOR SOIL-TREATMENT, SOIL TREATMENT SYSTEM AND SOIL CONSOLIDATION METHOD USING SUCH A GEOCOMPOSITE.

(30) Priorité: 09.12.2013 FR 1362297
(43) Date de publication de la demande: 19.10.2016
(73) Titulaire: Afitex International, 28000 Chartres (FR)
(72) Inventeur: BOURGÈS-GASTAUD, Sébastien, Robert, René, 06220 Vallauris Golfe-Juan (FR); DURKHEIM, Yves, 28600 Luisant (FR)
(74) Mandataire: Debay, Damien
(86) Numéro de dépôt international: PCT/EP2014/077094
(87) Numéro de publication internationale: WO 2015/086628

(56) Documents cités:
- EP-A1- 0 962 754
- WO-A1-95/21965
- WO-A1-2006/048594
- FR-A1- 2 955 596
- JP-A- 20033 295 34A
- A B FOURIE ET AL: "Dewatering of mine tailings using electrokinetic geosynthetics", CANADIAN GEOTECHNICAL JOURNAL, vol. 44, no. 2, 1 février 2007 (2007-02-01), pages 160-172, XP055146921, ISSN: 0008-3674, DOI: 10.1139/t06-112

## Description

### DOMAINE TECHNIQUE DE L'INVENTION

La présente invention concerne le domaine du traitement des sols, notamment pour la dépollution des sols ou l'assèchement de boues ou de résidus miniers par des phénomènes électrocinétiques. La présente invention concerne plus particulièrement un géocomposite de traitement des sols, système de traitement des sols, permettant l'assèchement des sols, notamment des boues ou des résidus (par exemple miniers), quelle que soit la nature des sols (boues ou résidus) et un procédé de consolidation de sols. Dans la présente demande, on utilise indifféremment les termes de sol, boue ou résidu pour désigner la même entité bien qu'on les distingue généralement, notamment à cause de leur nature organique, minérale ou complexe.

### ARRIERE-PLAN TECHNOLOGIQUE DE L'INVENTION

Un problème dans le domaine du traitement des sols, notamment des boues à forte teneur en eau, réside dans leur assèchement, qui est généralement difficile à cause de la faible granularité, d'un comportement colloïdale et de la faible conductivité hydraulique. Ces sols ou matériaux peuvent provenir, par exemple et de façon non limitative, de l'épuration des eaux usées, des industries minières (extractives) ou du dragage des sédiments fluviaux-portuaires. En effet, dans tous ces divers domaines, il est nécessaire d'assécher les matériaux notamment pour permettre leur consolidation, nécessaire à la réhabilitation des zones de stockage dédiées. Par exemple, les industries minières conduisent généralement à une énorme production de déchets minéraux, souvent dilués dans de grandes quantités d'eau. Lorsque l'eau est utilisée pour concentrer le minerai utile, des déchets apparaissent généralement sous forme de boues, pulpes ou résidus, qui sont essentiellement des dispersions de particules de déchets solides dans l'eau. En particulier, mais de manière non limitative, l'exploitation des sables bitumineux, du phosphate ou le raffinage d'alumine ont en commun de générer des boues à grain très fin (D₈₀ < 20 µm) et à forte teneur en argile. Ce type de boues ou résidus présentent une faible résistance au cisaillement, un comportement liquide et ne peuvent pas être stockés facilement. Les résidus sont souvent dilués dans d'importantes quantités d'eau et généralement déposés sur le sol, dans un bassin dédié, par exemple entouré de digues, par exemple construites à partir de la fraction la plus grossière des résidus. Ces bassins de résidus sont souvent de très grandes installations qui sont connues pour être instables, pouvant générer des coulées de boues destructrices, généralement à cause d'une mauvaise gestion de l'eau (drainage insuffisant, érosion interne, débordement). Pour permettre la réhabilitation des bassins de résidus (e.g., augmenter la capacité portante) et de minimiser la consommation d'eau (éviter le stockage dans les bassins), les boues doivent être consolidées/asséchées. La déshydratation (ou assèchement) des matériaux à haute teneur en eau est donc essentielle pour réduire l'impact environnemental de certaines industries et, d'une manière générale, pour fournir des solutions pratiques et économiques à ces problèmes.

Il est connu de l'art antérieur des solutions de déshydratation mécanique telles que la filtration/compression, comme par exemple les filtres à bandes ou les filtres-presses, souvent avantageuses pour leurs faibles coût et consommation d'énergie. Cependant, ce type de solution ne permet pas, pour de nombreuses applications, d'atteindre un pourcentage de contenu solide assez élevé, notamment parce que les boues sont un système colloïdal possédant de forts effets de surface. En raison de l'importance des forces de liaison de l'eau à la matière solide et de fortes forces électrostatiques entre les petites particules, les forces mécaniques à appliquer sont souvent trop importantes pour que ces solutions permettent d'atteindre efficacement un contenu solide assez élevé.

De plus, l'eau dans les boues ou résidus se trouve généralement sous quatre formes principales que sont l'eau libre, l'eau interstitielle, l'eau pelliculaire et l'eau de constitution. L'eau libre, aussi appelée eau gravifique, n'est pas affectée par les forces capillaires et peut être enlevée par assèchement mécanique. L'eau interstitielle, maintenue dans les espaces poraux par des forces capillaires, ne répond pas à la gravité et seule une partie peut être éliminée par déshydratation mécanique. L'eau vicinale, fortement liée aux particules solides par adsorption dans la double couche électrique, est constituée de molécules d'eau stratifiées sur la surface des solides. L'eau d'hydratation, étroitement liée chimiquement aux molécules solides, ne peut être retirée de la boue que par chauffage. En raison de la proportion importante de particules fines à grande surface spécifique (comme l'argile par exemple) dans les boues ou résidus, les forces capillaires exercées sont très importantes et il est probable qu'une grande partie de l'eau soit de l'eau pelliculaire et de l'eau interstitielle, nécessitant des solutions adaptées.

Il est également connu dans l'art antérieur, dans le domaine du traitement des sols, des solutions pour drainer les liquides, comme par exemple des géotextiles ou, de façon plus avantageuse, des géocomposites, par exemple tels que ceux décrits dans les demandes de brevet WO 2006/030076, WO2011015736 ou WO2012/080659 comprenant au moins 2 nappes de géotextile et des mini-drains perforés améliorant l'évacuation des fluides. Ce type de solution présente l'avantage d'accélérer et améliorer l'assèchement, notamment par la possibilité d'en fournir avec de larges dimensions pour offrir ce que l'on appelle généralement des horizons de drainage. En effet, les géocomposites de drainage peuvent être insérés dans les bassins à résidus afin de créer une couche (horizon) de drainage fournissant des conditions favorables aux résidus en impliquant plusieurs phénomènes mécaniques qui peuvent conduire à la consolidation. L'horizon de drainage dans les résidus saturés interrompt en effet le profil de pression hydrostatique de l'eau. Ainsi, l'eau au-dessus de l'horizon drainant n'est plus portée par l'eau sous l'horizon drainant, et ainsi le poids de l'eau contenue au-dessus de l'horizon agit comme une charge réelle sur le matériau en-dessous de l'horizon. Ainsi, la contrainte effective appliquée sur les couches inférieures est augmentée ce qui conduit à la consolidation des couches inférieures. D'autre part, avec un horizon de drainage, le fluide de la couche supérieure tend à s'écouler vers le bas et ce mouvement induit une force d'infiltration qui induit aussi une augmentation de la contrainte effective et favorise la consolidation.

Il est également connu dans l'art antérieur des solutions d'assèchement des sols utilisant des phénomènes électrocinétiques. Ces phénomènes peuvent revêtir plusieurs aspects, comme l'électrophorèse (déplacement d'ions dans une solution sous l'effet d'un champ électrique), l'électro-osmose (déplacement d'un liquide dans un milieu poreux sous l'effet d'un champ électrique), l'électrodialyse (déplacement d'ions au travers d'une membrane sous l'effet d'un champ électrique) ou l'électro-migration (déplacement d'atomes sous l'effet d'un champ électrique). L'électro-osmose peut être utilisée dans les sols argileux par exemple ; l'eau se déplace de l'anode vers la cathode sous l'effet d'un champ électrique continu. La double couche électrique est responsable de ce phénomène: l'argile présente une surface chargée négativement et les cations sont adsorbés dans la double couche électrique à la surface de l'argile. Sous l'effet d'un champ électrique, les cations de la couche diffuse sont attirés vers la cathode et entraînent avec eux l'eau environnante par couplage visco-moteur, créant ainsi un flux net d'eau vers la cathode. Par conséquent, ces phénomènes peuvent être utilisés en génie civil pour consolider des matériaux argileux, qui sont particulièrement difficiles à consolider en raison de leur très faible conductivité hydraulique.

Il est également connu de tirer avantage de ces phénomènes pour assécher les sols, comme par exemple dans les demandes de brevet WO200158610 et WO200046450 où divers systèmes et notamment des géosynthétiques intégrant des électrodes sont utilisés pour appliquer des phénomènes électrocinétiques dans les sols en vue d'améliorer la déshydratation. Cependant ces solutions, qui n'ont souvent été validées qu'à petite échelle (notamment à l'échelle du laboratoire ou, au mieux, sur des surfaces de l'ordre de quelques mètres ou dizaines de mètres, ou mètres carrés) présentent généralement l'inconvénient de ne pas être adaptés à une mise en œuvre sur des sites de grande envergure, comme par exemple des bassins miniers.

Les problèmes liés aux échelles de grandes tailles sont notamment les volumes d'eau, les dimensions des sites à traiter et l'évacuation. Il est connu des solutions, comme par exemple la demande WO200039405, où il est tiré avantage de la possibilité de fournir de grandes dimensions de géosynthétiques dans lesquelles des électrodes souvent disposées.

Cependant, ce type de solution reste confronté aux problèmes liés à la nature des sols, boues ou résidus qui peuvent saturer les nappes géosynthétiques et corroder de manière importante les divers matériaux utilisés, rendant ce type de solution rapidement inexploitable. Un problème récurrent de l'application de l'électro-osmose sur le terrain concerne en effet la corrosion rapide de l'anode. Pendant le traitement, l'électrolyse de l'eau entraine une chute du pH à proximité de l'anode (qui peut descendre jusqu'à 1 ou 2), de plus le flux électronique à l'anode entraine la lyse du métal qui conduit à sa dissolution. Cette corrosion électrochimique est problématique quel que soit le métal utilisé. Ainsi, malgré la précieuse contribution de l'électro-osmose pour déshydrater un matériau à faible perméabilité, elle n'est pas largement utilisée dans les applications géotechniques, notamment à cause de la courte durée de vie de l'anode. En effet, la corrosion induit une diminution rapide de l'efficacité du traitement, jusqu'à la disparition totale de l'anode dans un temps relativement court (par exemple un seul jour).

Il est connu dans l'art antérieur, notamment de la demande de brevet EP0962754 des procédés de détection de fuite dans les sols à l'aide de géotextiles intégrant des électrodes. Cependant, ce type de solution ne permet pas de consolider des sols. D'autre part, il est connu dans l'art antérieur, notamment du document "Dewatering of mine tailings using electrokinetic geosynthetics", de AB FOURIE et al. dans « Canadian Geotechnical Journal », vol. 44, no. 2, 1 février 2007 (2007-02-01), pages 160-172, XP055146921, ISSN: 0008-367 4, DOI: 1 0.1139/t06-112, des systèmes de consolidation de sols utilisant des géotextiles et des électrodes de diverses natures. En particulier, ce document détaille l'inefficacité de certaines électrodes en carbone mais détaille une relative efficacité et stabilité d'électrodes comprenant du métal (inox) entouré par une résine intégrant du noir de carbone. Cependant, ce type de solution présente l'inconvénient de nécessiter la fabrication complexe et couteuse d'une résine (de polyéthylène haute densité) intégrant du noir de carbone et d'un fil entouré de cette résine, mais surtout de résulter tout de même en des électrodes de stabilité limitée, car, lors de son utilisation, la résine perd de sa plasticité à cause de l'intégration du noir de carbone et se dégrade assez rapidement (se fendille notamment), soumettant ainsi le métal à la corrosion.

Dans ce contexte, il est intéressant de proposer une solution fiable et viable qui offre les avantages de l'art antérieur sans pâtir de leurs inconvénients et répondant aux besoins connus.

### DESCRIPTION GENERALE DE L'INVENTION

La présente invention a pour but de pallier au moins certains inconvénients de l'art antérieur en proposant un système de traitement des sols, notamment pour la dépollution des sols ou l'assèchement de boues ou de résidus miniers par des phénomènes électrocinétiques, qui soit fiable et viable, notamment à grande échelle.

Ce but est atteint par un système de traitement des sols comprenant, d'une part, au moins un générateur électrique et au moins deux électrodes et, d'autre part, au moins un dispositif d'évacuation, caractérisé en ce que :
- le système comporte au moins un géocomposite qui intègre au moins une partie d'au moins une desdites électrodes et qui comprend au moins une nappe filtrante et/ou au moins une nappe drainante,
- des mini-drains perforés sont intégrés dans ledit géocomposite,
- au moins une partie d'au moins une desdites électrodes est disposée selon un trajet sensiblement parallèle aux mini-drains.

Selon une alternative, au moins une partie des deux électrodes comporte du carbone.

Selon une alternative, une seule des deux électrodes possède au moins une partie comportant du carbone tandis que l'autre électrode est métallique.

Selon une autre particularité, les électrodes sont enroulées autour des mini-drains du géocomposite.

Selon une alternative, ledit carbone desdites électrodes est sous forme de fibres de carbone.

Selon une alternative, les fibres de carbone sont cousues sur au moins une nappe du géocomposite.

Selon une alternative, les deux électrodes possèdent au moins une partie intégrée dans ou sur des lés distincts de géocomposite disposés à distance l'un de l'autre au sein du sol à traiter.

Selon une alternative, le système comporte des moyens de commutation pour inverser la polarité des électrodes.

Selon une alternative, lesdites électrodes dont au moins une partie comporte du carbone comprennent au moins une autre partie en métal pour améliorer la distribution du courant du générateur sur de longues distances.

Selon une autre alternative, lesdites parties en métal et leurs connexions avec les parties en carbone sont munies de moyens de protection contre la corrosion.

Selon une autre alternative, les moyens de protection contre la corrosion comportent des moyens d'isolation étanches à l'eau.

Un autre but de la présente invention est de pallier au moins certains inconvénients de l'art antérieur en proposant un géocomposite pour le traitement des sols, notamment pour la dépollution des sols ou l'assèchement de boues ou de résidus miniers par des phénomènes électrocinétiques, qui soit fiable et viable, notamment à grande échelle.

Ce but est atteint par un géocomposite de traitement des sols, caractérisé en ce qu'il est agencé pour une utilisation dans un système selon certains modes de réalisation de l'invention, au moins par le fait qu'il comprend au moins une nappe filtrante et/ou au moins une nappe drainante, avec des mini-drains perforés intégrés et qu'il intègre au moins une partie d'au moins une des électrodes du système, disposées selon un trajet sensiblement parallèle aux mini-drains.

Un autre but de la présente invention est de pallier au moins certains inconvénients de l'art antérieur en proposant un procédé de traitement des sols, notamment pour la dépollution des sols ou l'assèchement de boues ou de résidus miniers par des phénomènes électrocinétiques, qui soit fiable et viable, notamment à grande échelle.

Ce but est atteint par un procédé de consolidation de sols, notamment de boues ou résidus, par l'utilisation d'un système selon l'invention, dans un bassin de consolidation, le procédé étant caractérisé en ce qu'il comporte :
- pose d'au moins un géocomposite selon l'invention dans ledit bassin ;
- connexion du géocomposite avec le dispositif d'évacuation ;
- connexion de ladite au moins une électrode du géocomposite avec ledit générateur électrique ;
- déversement de boues ou résidus sur le géocomposite ;
- connexion de l'autre électrode avec ledit générateur électrique.

Selon une alternative, le procédé comporte une pose d'un second géocomposite selon l'invention dans ledit bassin et l'étape de connexion de l'autre électrode avec ledit générateur électrique correspond à une connexion de l'électrode de ce second géocomposite.

Selon une autre alternative, le procédé comporte une inversion de polarité des électrodes, grâce à des moyens de commutation, cette inversion de polarité étant mise en œuvre au bout d'une période déterminée, pour optimiser la durée de vie et/ou l'efficacité du système.

### DESCRIPTION DES FIGURES ILLUSTRATIVES

D'autres particularités et avantages de la présente invention apparaîtront plus clairement à la lecture de la description ci-après, faite en référence aux dessins annexés, dans lesquels :
- la figure 1 représente une vue en perspective d'un système de traitement selon certains modes de réalisation de l'invention,
- la figure 2 représente une vue en perspective d'un système de traitement selon certains modes de réalisation de l'invention,
- la figure 3 représente une vue en coupe d'une partie d'un système de traitement, mis en place dans le sol, selon certains modes de réalisation de l'invention,
- les figures 4A et 4B représentent des vues en coupe d'une partie d'un système de traitement, mis en place dans le sol, selon divers modes de réalisation de l'invention,
- les figures 5A, 5B et 5C représentent des vues en perspective d'une partie d'un géocomposite de traitement selon divers modes de réalisation de l'invention,
- la figure 6 représente un diagramme schématique d'un procédé selon certains modes de réalisation de l'invention.

### DESCRIPTION DES MODES DE REALISATION PREFERES DE L'INVENTION

La présente invention concerne un système, un géocomposite et un procédé de traitement de sols (S), en particulier de boues ou résidus miniers comme détaillé dans le préambule. Ces boues ou résidus (S) sont généralement déversées dans un bassin (B) entouré de digues (D) et muni de moyens d'évacuation tels que des tuyaux d'évacuation (3) et au moins un dispositif d'évacuation (20).

### SYSTEME

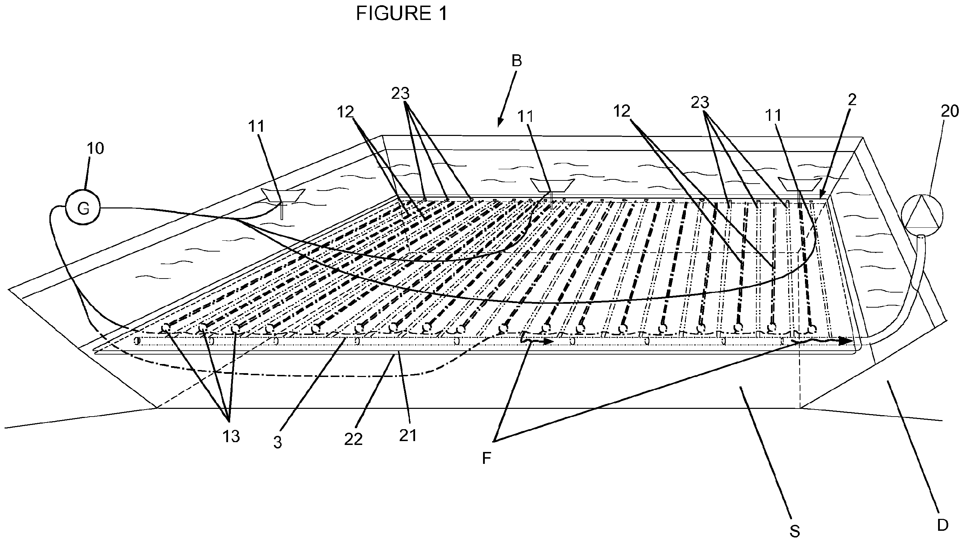

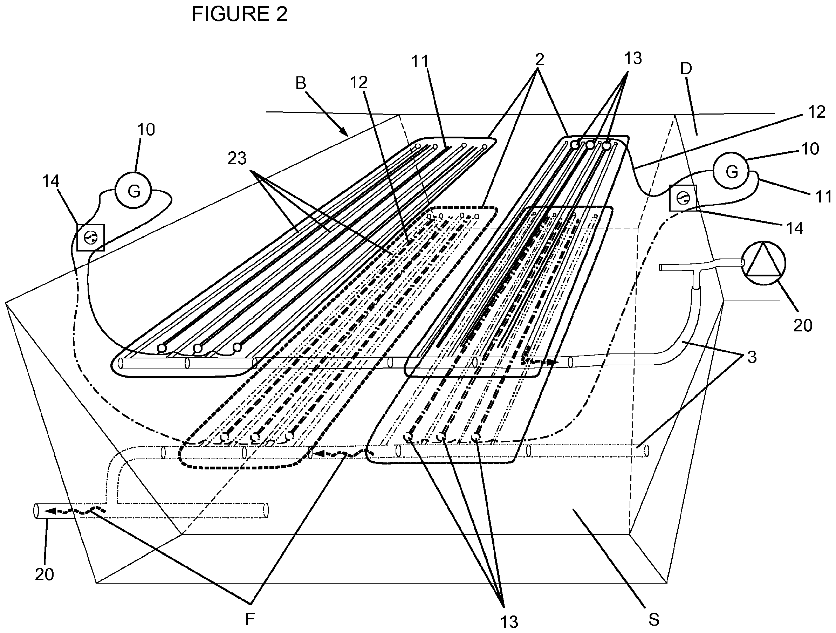

Le système de traitement des sols, particulièrement avantageux pour la dépollution des sols ou l'assèchement de boues ou de résidus miniers par des phénomènes électrocinétiques, comprend, d'une part, au moins un générateur électrique (10) et au moins deux électrodes (11, 12) et, d'autre part, au moins un dispositif d'évacuation (20). Ce dispositif d'évacuation (20) permet d'évacuer les fluides (F), généralement des liquides, désignés ici par le terme « eau » qui est en fait utilisé que l'eau soit encore ou non chargée en matières organiques ou minérales ou autre (il s'agit en effet souvent d'une « boue diluée »). Ce dispositif d'évacuation (20) peut comporter par exemple une pompe, par exemple comme représenté sur la figure 1, mais il peut simplement comporter un exutoire, comme par exemple des conduits ménagés dans le bassin pour récolter l'eau qui s'écoule de manière gravitaire. Ce dispositif d'évacuation peut également comporter toute combinaison d'évacuations actives et passives, comme par exemple représenté sur la figure 2. Bien entendu, l'évacuation de l'eau (F) se fera généralement à l'aide de tuyaux d'évacuation (3) disposés dans le bassin (B) et reliés au dispositif d'évacuation (20). Le système selon l'invention comporte de préférence au moins un géocomposite (2) qui intègre au moins une partie d'au moins une desdites électrodes (11, 12) et qui comprend au moins une nappe filtrante (21) et/ou au moins une nappe drainante (22). De plus, au moins une partie d'au moins une desdites électrodes (11, 12) comporte du carbone.

Ainsi, ce système, grâce au géocomposite qui intègre au moins une électrode, permet d'appliquer la tension / le courant directement dans le sol à assécher et fournit un media efficace pour le drainage des eaux (F) grâce à la ou aux nappe(s), et de préférence aux mini-drains intégrés au géocomposite dans certains modes de réalisation. On utilise le terme de nappe ici pour désigner d'une manière générale tout type de géosynthétique, qu'il s'agisse de géotextile ou non, notamment ceux classiquement utilisés dans les applications d'assèchement des sols. De plus, on parle ici d'au moins un géocomposite et l'homme de métier appréciera que l'on peut en fait disposer des lés de géocomposite ou plusieurs géocomposites, de tailles variables, comme par exemple visible en comparant les figures 1 et 2, ce terme n'impliquant en fait aucune limitation sur les formes et dimensions, à l'exception du fait qu'il permette de couvrir des surfaces importantes comme celles des bassins de résidu. De même, on parle ici d'au moins deux électrodes (11, 12) et notamment d'au moins une cathode et au moins une anode. Cependant, comme les applications industrielles de l'invention concernent généralement des zones de grandes dimensions, on préfèrera généralement multiplier le nombre d'électrodes. D'autre part, l'invention utilise de préférence un géocomposite dont les nappes sont en textile, qui offre une bonne flexibilité grâce au fait qu'il est composé de fibre et/ou de fil. Ce textile forme le support des éléments conducteurs formant les électrodes dans le système. De plus, dans certains modes de réalisation préférés, ce textile forme aussi le support pour les mini-drains qui améliorent l'évacuation des eaux. Ce type de géocomposite en textile permet de prévoir de grandes dimensions (large étendue bidimensionnelle), notamment grâce à une fabrication facilitée, par exemple par aiguilletage comme décrit dans les demandes de brevet WO 2006/030076, WO2011015736 ou WO2012/080659. La flexibilité offre, outre les facilités de fabrication et de manipulation, la possibilité de livrer le géocomposite en rouleau déroulable sur site. Enfin, le textile fournit une fonction de filtration (séparer le solide du liquide) en plus de la fonction de drainage.

Divers modes de réalisation de l'invention présentent également l'avantage de fournir un support particulièrement efficace, viable et fiable pour les phénomènes électrocinétiques. Dans certains de ces modes de réalisation, il est fait utilisation d'au moins une électrode comprenant du carbone, de préférence sous la forme de fibres de carbone. Le carbone, utilisé de préférence pur ou au moins à des pourcentages supérieurs à 20%, et agencé sous forme de fibres, sera préférentiellement structuré pour former des fils intégrés dans le géocomposite. En effet, le carbone n'a jamais été utilisé à de tels pourcentages et/ou sous cette forme pour appliquer un champ électrique dans ce type d'application. Pourtant les inventeurs de la présente invention ont découvert qu'il se montrait suffisamment efficace pour conduire l'électricité nécessaire aux phénomènes électrocinétiques et qu'il fournissait l'avantage supplémentaire d'être particulièrement résistant à la corrosion. Ainsi, même s'il conduit moins l'électricité qu'un métal, il permet de remplir son rôle de conducteur, mais il permet surtout d'obtenir des volumes d'eaux évacuées nettement supérieurs à ceux obtenus avec des métaux puisqu'il offre une meilleur longévité et une meilleure fiabilité dans le temps. De plus, le terme « comportant du carbone » est ici utilisé pour insister sur le fait que l'électrode peut bien entendu être en carbone mais qu'elle peut aussi contenir d'autres matériaux et que c'est la présence de carbone qui s'avère généralement suffisante, notamment lorsqu'il est présent sous la forme de fibres (de préférence structurées en fils) et/ou à partir d'un pourcentage supérieur à 20%. Néanmoins, on choisira de préférence une électrode comportant des fibres en carbone pur, pour remplir pleinement les fonctions décrites ici. On désigne donc dans la présente description par « en carbone » le fait que l'électrode comporte du carbone (qu'elle soit complètement en carbone ou non) et par « en fibres de carbone » le fait que l'électrode comporte des fibres de carbone, que ces dernières soient composées de 100% de carbone (de préférence) ou moins. Ainsi, l'expression « en carbone » couvre bien entendu l'expression « en fibres de carbone ». dans certains modes de réalisation, notamment en ce qui concerne les électrodes intégrées au géocomposite, ledit carbone desdites électrodes (11, 12) est sous forme de fibres de carbone. La composition de ces fibres les rend particulièrement résistante à la corrosion et suffisamment conductrices pour être utilisées dans la présente invention. Ces fibres de carbone ont l'avantage d'être facilement manipulables, notamment sur de grandes longueurs, ce qui rend leur intégration au géocomposite plus aisée. De plus, ces fibres peuvent être livrées sous forme de fils de diamètres et de longueurs variables, facilitant leur intégration dans le géocomposite. Ainsi, dans certains modes de réalisation, les fibres de carbone sont cousues ou aiguilletées sur au moins une nappe (21, 22) du géocomposite (2). Dans certains modes de réalisation, les fibres sont simplement interposées entre deux nappes du géocomposite et l'assemblage des nappes, par exemple par aiguilletage comme détaillé dans la présente demande, permet l'immobilisation des fibres de carbone dans le géocomposite, comme détaillé ci-après.

D'autre part, c'est dans la portion qui se trouve au contact des boues ou résidus que le carbone est important. Ainsi, selon divers modes de réalisation, la (ou les) électrode(s) dont au moins une partie comporte du carbone est (ou sont) reliée(s) à au moins une partie en métal pour améliorer la distribution du courant du générateur (10) sur de longues distances. En effet, on préfèrera généralement conduire le courant par du métal sur les grandes distances que couvrent les bassins (B) de traitement connus et tirer avantage du carbone pour la distribution du courant au sol à traiter. En revanche, comme le métal est très facilement corrodé dans de tels bassins, il sera de préférence isolé sur tout son chemin jusqu'aux parties en carbone. De plus, dans certains modes de réalisation, on préfèrera généralement que lesdites parties en métal et leurs connexions avec les parties en carbone sont munies de moyens de protection (13) contre la corrosion. Un boitier de protection (contre les courts-circuits, mais également contre la corrosion) pourra donc être utilisé. Ainsi, dans certains modes de réalisation, les moyens de protection (13) contre la corrosion comportent des moyens d'isolation étanches à l'eau. Néanmoins, de tels moyens de protection (13) peuvent simplement résider dans le fait que le réseau de distribution métallique et/ou les connexions est (ou sont) en-dehors des boues ou résidus. Tout dispositif émergeant des boues formerait donc de tels moyens de protection (13). Cependant, pour que le carbone soit réservé aux parties réellement au contact des boues, on préfèrera des dispositifs de protection étanches, notamment tels que ceux illustrés sur les figures 1 et 2.

Comme mentionné dans le préambule de la présente demande pour l'exemple des sols argileux, l'eau se déplace de l'anode vers la cathode sous l'effet d'un champ électrique continu. On tire donc avantage de ce phénomène en disposant au moins une des électrodes dans ou sur le géocomposite pour que l'eau ainsi déplacée soit plus facilement drainée et évacuée. On préfère donc généralement que ce soit au moins la cathode qui soit intégrée au géocomposite (« intégrée au » signifiant ici intégrée dessus ou à l'intérieur) puisqu'elle attire l'eau. D'autre part, l'anode est l'électrode qui se corrode rapidement à cause de l'acidification et de l'électrolyse. On préfère donc généralement que ce soit au moins l'anode qui comporte du carbone. Ainsi, dans certains modes de réalisation, comme par exemple représenté sur la figure 1, le système peut comporter au moins une électrode (12), de préférence la cathode, intégrée au géocomposite (2) connecté au dispositif d'évacuation (20) et au moins une électrode (11), de préférence l'anode, disposée en dehors du géocomposite, comme par exemple sur une embarcation, telle qu'une barge flottante par exemple. L'anode (11) peut alors être déplacée rapidement, notamment pour pallier au problème de l'assèchement de la zone anodique et elle peut être changée facilement pour pallier au problème de sa corrosion. De plus, l'anode comporte de préférence du carbone pour optimiser sa durée de vie, alors que la cathode peut dans ce cas être métallique (sans carbone). L'homme de métier comprendra que la configuration inverse reste dans la portée de l'invention car l'anode en carbone trouverait toute son utilité en étant intégrée au géocomposite (n'étant pas échangeable facilement, il est avantageux qu'elle résiste bien à la corrosion). Cependant, cette configuration inverse n'est pas préférée, car une cathode en dehors du géocomposite devrait être associée à un dispositif d'évacuation (20) spécifique (éventuellement supplémentaire à celui connecté au géocomposite) et serait peu efficace, notamment sur une embarcation. De plus, l'assèchement de la zone anodique ne serait pas combattu et les propriétés drainantes du géocomposite ne seraient pas aussi bien exploitées que dans le cas où ce dernier intègre la cathode. Enfin, les configurations réellement préférées, en général, seront celles où ce sont les deux électrodes (11, 12) qui comportent au moins une partie en carbone. En effet, dans ces configurations, les deux électrodes peuvent tour à tour jouer le rôle de cathode et d'anode et on peut tirer avantage de chacune des deux configurations détaillées ci-dessus. De plus, avec deux électrodes (11, 12) en carbone, il est possible de tirer pleinement avantage des modes de réalisation préférés de la présente invention, par exemple du type de celui représenté sur la figure 2. Ces modes de réalisation préférés reposent sur le fait que les deux électrodes sont intégrées au(x) géocomposite(s). Ainsi, les deux électrodes sont disposées au contact des boues. On préfère alors que ces deux électrodes soient en carbone pour en tirer pleinement avantage grâce au fait que l'on puisse alors inverser la polarité des électrodes, par exemple par des moyens de commutation (14), par exemple prévus dans le générateur (10) ou en complément de ce dernier. En inversant la polarité, on limite l'assèchement de la zone anodique et on ralenti la corrosion en la répartissant de manière plus régulière sur les deux électrodes alternativement. Cette utilisation de ces modes de réalisation préférés est détaillée dans la présente demande en référence au procédé de consolidation.

Dans certains de ces modes de réalisation préférés, les deux électrodes (11, 12) possèdent au moins une partie intégrée dans ou sur des lés distincts de géocomposite (2) disposés à distance l'un de l'autre au sein du sol à traiter. Deux lés disposés à une distance déterminée (en fonction de la nature du sol et de l'intensité ou la tension à appliquer, de la conductivité, etc.) seront donc reliés chacun à un pôle du générateur pour qu'ils jouent le couple anode-cathode et assèchent le sol compris entre leurs surfaces. Dans ces modes de réalisation, l'installation est facilitée et il est possible de multiplier les couples de géocomposites pour améliorer la conduction d'électricité sur tout le site (notamment avec des matériaux plus conducteurs que le carbone, comme mentionné plus haut).

### GEOCOMPOSITE

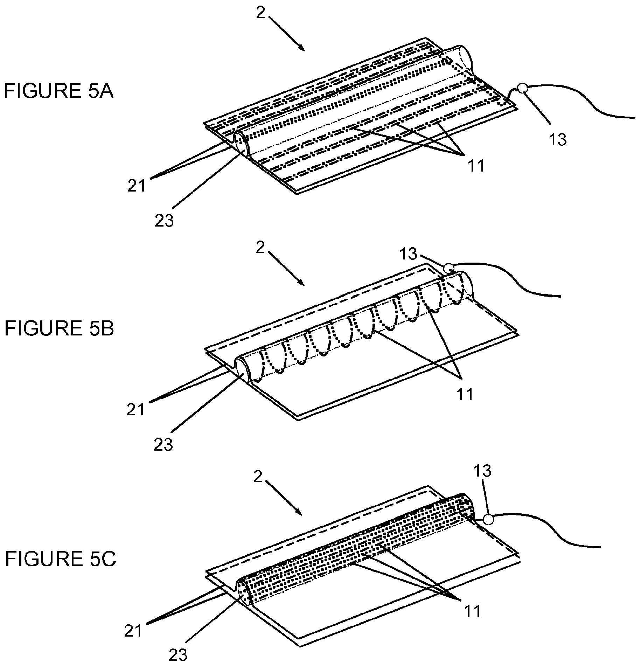

La présente invention concerne donc également un géocomposite (2) pour le traitement des sols, notamment pour une utilisation dans un système selon l'invention. Ce géocomposite intègre au moins une partie d'au moins une des électrodes (11, 12) du système et il comprend au moins une nappe filtrante (21) et/ou au moins une nappe drainante (22). Dans certains modes de réalisation, au moins une partie d'au moins une desdites électrodes (11, 12) du système comporte du carbone. De plus, on préfère généralement que ce soit l'électrode intégrée au géocomposite qui comporte du carbone. Cependant, dans certains modes de réalisation, les électrodes utilisées peuvent être toutes en métal ou autre matériau suffisamment conducteur, notamment parmi les matériaux connus de l'art antérieur, comme par exemple le cuivre ou le graphite ou même certaines matières plastiques. En revanche, les électrodes comprenant du carbone sont parfois plus résistantes à la corrosion, notamment lorsqu'elles comportent des fibres de carbone. En effet, certaines électrodes comportant du carbone sont instables, comme par exemple les électrodes comprenant du noir de carbone (résidu de combustion), par exemple intégré dans des résines (par exemple en polyéthylène), à cause de la structure même du matériau et/ou de sa fabrication, tandis que les électrodes en fibres de carbone sont très résistantes à la corrosion et sont donc préférentiellement utilisées dans la présente invention. Dans certains modes de réalisation, en particulier dans le cas d'électrodes en autre matériau que les fibres de carbone, on prévoira de préférence un remplacement facilité des électrodes, ou même des géocomposites, puisque la longévité pourra être plus réduite, à moins qu'un autre matériau aussi résistant que les fibres de carbone à la corrosion ne soit utilisé. Un tel remplacement facilité st obtenu par l'intégration des électrodes dans des mini-drains du géocomposite, comme dans certains modes de réalisation détaillés ci-après. En effet, en prévoyant un accès à ces mini-drains et aux électrodes qu'ils contiennent, il peut être envisagé de retirer les électrodes érodées et d'en introduire de nouvelles, à l'aide d'un guide (de préférence rigide ou semi-rigide) à introduire dans les mini-drains ou d'un guide (de préférence non corrodable, mais souple ou rigide) déjà en place dans les mini-drains. Le géocomposite selon l'invention comporte des mini-drains perforés (23) qui sont intégrés dans ledit géocomposite (2). Ces mini-drains facilitent l'évacuation de l'eau, qu'elle ait lieu par un dispositif passif (e.g., exutoire) ou un dispositif actif (e.g., pompage) comme détaillé plus haut. En effet, il est aisé de relier ces mini-drains (23) à des tuyaux d'évacuation (3), comme par exemple représenté sur les figures 1 et 2, et l'eau quitte alors facilement le bassin grâce à de tels géocomposites particulièrement efficaces et optimisés par les phénomènes électrocinétiques. Comme les électrodes sont préférentiellement disposées au sein des boues pour améliorer l'assèchement, il est préféré de les disposer au plus près des moyens d'évacuation d'eau (tuyaux reliés au dispositif d'évacuation). Ainsi, au moins une partie d'au moins une desdites électrodes (11, 12) sont disposées sensiblement parallèlement aux mini-drains (23), comme par exemple représenté sur les figures 5A et 5C. Dans l'exemple illustratif et non limitatif de la figure 5A, les électrodes sont disposées entre deux nappes du géocomposite, selon un trajet sensiblement parallèle aux mini-drains (23). La fixation des électrodes (11, 12), qui n'est pas indispensable selon les cas, pourra être réalisée par couture ou aiguilletage ou simplement par l'assemblage des nappes du géocomposite ou tout moyen approprié, comme discuté plus haut en référence aux fibres de carbone. Dans l'exemple illustratif et non limitatif de la figure 5C, les électrodes sont disposées le long des mini-drains (23) et suivent donc un trajet parallèle aux mini-drains. Dans cet exemple, une fixation pourra être prévue par exemple sur la portion des nappes qui est destinée à entourer les mini-drains (23). Dans l'exemple illustratif et non limitatif de la figure 5B, les électrodes (11, 12) sont enroulées autour des mini-drains (23) du géocomposite (2) et suivent donc un trajet sensiblement parallèle aux mini-drains. Dans cet exemple, la fixation est encore moins nécessaire, notamment dans le cas d'annelures sur les mini-drains, comme expliqué ci-après. Dans d'autres modes de réalisation, une combinaison de ces diverses dispositions d'électrodes parallèles aux mini-drains pourra être utilisée, comme par exemple à l'intérieur et/ou le long et/ou autour des mini-drains. Dans certains modes de réalisation, les électrodes peuvent éventuellement être disposées à l'intérieur des mini-drains, mais on préfère généralement les disposer à l'extérieur des minis-drains, voire même à l'extérieur des nappes (donc sur les nappes mais pas entre deux nappes) de façon à ce que les électrodes soient le plus en contact possible avec le liquide. En effet, l'électrode n'est efficace que si elle est en contact direct avec le liquide et elle l'est d'autant plus que le liquide est riche en eau. En particulier, comme les boues s'assèchent généralement autour de l'anode, on préfère que cette dernière ne soit pas entourée de structures risquant de limiter le flux d'eau (comme par exemple les nappes filtrantes ou les mini-drains ou autre). Ainsi, même si l'on souhaite un trajet d'au moins une des électrodes sensiblement parallèle aux mini-drains, on préfère généralement ne pas l'intégrer dans ces derniers. Dans les divers modes de réalisation possibles de l'invention, on prévoira généralement une sortie des électrodes au travers ou sur les bords du géocomposite, pour la connexion avec le générateur, directement ou via d'autres fils conducteurs et éventuellement via les moyens de protection (13) comme déjà expliqué ici. Lesdits mini-drains (23) sont de préférence parallèles entre eux. De façon non limitative, les mini-drains (23) peuvent être répartis de façon à ce qu'ils soient espacés d'une distance allant de 0,2 mètre à 4 mètres de largeur du géocomposite (2), de préférence entre 0,5 et 2 mètres, idéalement de l'ordre du mètre. Ces modes de réalisation à électrodes parallèles aux mini-drains sont particulièrement avantageux en termes d'efficacité électrocinétique, quel que soit le matériau utilisé pour les électrodes (carbone ou non), car les électrodes attirent l'eau au plus près des mini-drains qui forment la source de drainage (pompage) principale dans ces modes de réalisation. Néanmoins, on préfère généralement utiliser une combinaison de ces modes de réalisation, en utilisant des électrodes en carbone, de préférence en fibres de carbone, agencées selon un trajet sensiblement parallèle à des mini-drains intégrés dans le géocomposite, car la conduction du carbone est nettement suffisante, en particulier si l'on utilise des mini-drains pour le pompage. Néanmoins, selon les applications (notamment les dimensions), les phénomènes électrocinétiques sont à considérer au niveau macroscopique et il suffit en fait que les électrodes se situent dans le même plan moyen que le géocomposite (« moyen » signifiant que le plan n'est pas forcément plat et que de légère variations sont possibles, mais également que l'on peut en fait disposer les électrodes à une faible distance des nappes du géocomposite même si l'on préfère ne pas le faire pour des raisons pratiques de mise en place du système et/ou de fabrication). Ainsi, même si les électrodes (en carbone ou non) sont en fait non parallèles aux mini-drains (par exemple perpendiculaires ou obliques), de bons résultats peuvent parfois être tout de même obtenus, du moment que les électrodes sont suffisamment proches des mini-drains pour que l'eau attirée par ces électrodes puisse être évacuée par ces mini-drains, en particulier si la répartition des électrodes est adaptée à la nature du géocomposite. Cependant, un agencement des électrodes parallèles aux mini-drains reste souvent avantageux car même si le géocomposite peut jouer majoritairement son rôle dans son plan moyen, notamment en transmettant le poids des boues en-dessous de lui, les électrodes jouent toujours un rôle pour attirer l'eau et le fait de les disposer à proximité des mini-drains présente généralement un avantage pour le flux de l'eau dans les boues et l'évacuation de l'eau par les mini-drains.

Les mini-drains (23) sont perforés. Dans certains de ces modes de réalisation, ils possèdent des perforations qui, au lieu d'être rondes sont ovales ou oblongues pour limiter la résistance à l'entrée de fluide et ainsi de limiter le colmatage des perforations. De manière illustrative et non limitative, ces perforations pourront avoir une taille de l'ordre de 0,5 millimètre à 2 millimètres, de préférence de 0,7 à 1,5 mm, idéalement de l'ordre du millimètre. De plus, dans certains modes de réalisation, les mini-drains sont annelés pour fournir une meilleure résistance à la contrainte, ce qui permet leur enfouissement sous une quantité considérable de sol (S). Les mini-drains (23) ont pour but de capter le fluide (F) en vue d'une évacuation. Ils sont en général, de façon illustrative et non limitative, résistants à des contraintes allant jusqu'à 750 kPa ce qui correspond à environ 50 m de hauteur de sol (S) en moyenne au-dessus du mini-drain. Les mini-drains (23) sont résistants à la compression ce qui permet aux fluides de toujours pouvoir être évacués même lorsque le géocomposite (2) est enterré. Selon divers modes de réalisation, de façon non limitative, afin d'avoir une optimisation du flux du fluide, les mini-drains (23) peuvent avoir des diamètres compris entre 5 mm et 50 mm, de préférence entre 10 mm et 25 mm, idéalement de l'ordre de 25 mm. Les diamètres seront naturellement adaptés en fonction du sol à traiter. Néanmoins, le diamètre des mini-drains ne doit pas excéder une certaine valeur pour une composition et un agencement donnés des mini-drains, de façon à ce qu'ils résistent à la contrainte comme mentionné ci-dessus.

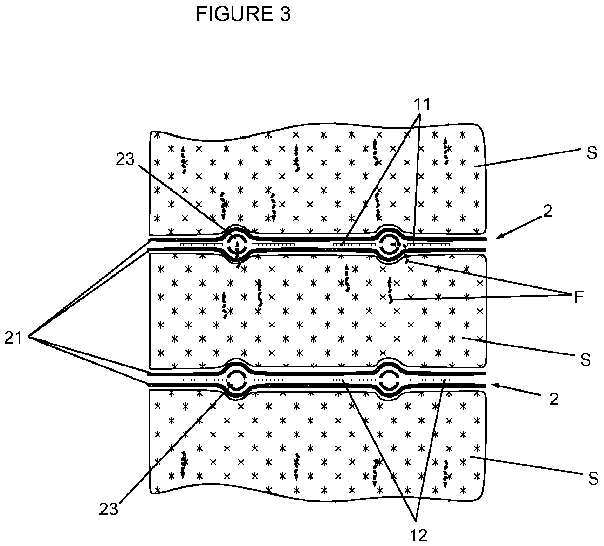

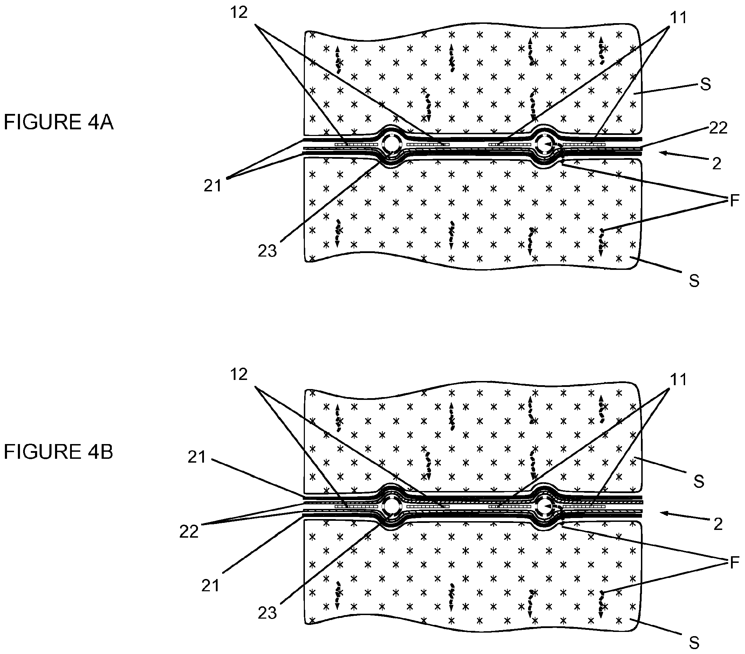

Comme mentionné précédemment, le géocomposite comporte de préférence des nappes textiles, comme par exemple ceux décrits dans les demandes de brevet WO 2006/030076, WO2011015736 ou WO2012/080659. Comme la fonction de filtrage est avantageuse dans le système, on prévoit au moins une nappe filtrante (21). Il est possible de ne prévoir qu'au moins une nappe drainante (22). Ainsi, on préfèrera généralement isoler une éventuelle nappe drainante (22) des boues en la recouvrant d'une nappe filtrante (21). Les nappes filtrantes (21) ont alors pour but de protéger la nappe drainante (22) du colmatage par de fines particules. De telles nappes ont par conséquent une porométrie adaptée à cette fonction, de même que la nappe drainante à une porométrie adaptée à sa fonction. Il est possible d'utiliser une nappe filtrante et une nappe drainante seulement, mais on préfère utiliser (au moins) deux nappes filtrantes, par exemple comme représenté de manière illustrative et non limitative sur la figure 3 où deux nappes filtrantes sont disposées de part et d'autre des électrodes et des mini-drains. Il est possible également de prévoir une nappe drainante à l'intérieure, comme par exemple représenté sur la figure 4A, ou encore deux nappes drainantes à l'intérieur comme par exemple représenté sur la figure 4B. L'utilisation d'au moins une nappe drainante sera envisagée selon les applications particulières de la présente invention, notamment la nature du terrain, des boues, etc. mais on évitera généralement leur utilisation pour des raisons de surcoût et la manipulation moins aisée.

D'autre part, il est possible de choisir des ouvertures de filtration différentes entre les deux nappes (supérieure et inférieure) pour faciliter l'évacuation de l'eau (F) en fonction des phénomènes électrocinétiques, de la nature du sol à filtrer et des conditions aux limites.

On notera que l'on parle ici de « nappe » qui est un terme classique pour un géotextile, correspondant en général à un enchevêtrement de fils aiguilletés qui peut être désigné également par le terme « feutre », mais il est possible d'utiliser d'autres types de revêtements, de préférence des géotextiles, tels que par exemple des textiles tissés ou non, tricotés ou non, etc.. Ce terme de « nappe » désignant classiquement un type de textile doit donc être interprété de façon moins limitative dans la présente demande car il est prévu de pouvoir utiliser d'autres types de revêtement que les nappes de géotextiles, bien que ces dernières soient particulièrement adaptées à la présente invention. En effet, les enchevêtrements de fils aiguilletés fournissent en général des perméabilités particulièrement adaptées à la présente invention.

### PROCEDE

La présente invention concerne également un procédé de consolidation de sols.

Ce procédé comporte au moins les étapes suivantes (chaque étape pouvant comporter plusieurs étapes et/ou être mise en œuvre en une seule fois ou être mise en œuvre par des actions successives complémentaires) :
- pose (51) d'au moins un géocomposite (2) selon la revendication 14 dans ledit bassin (B) ;
- connexion (54) du géocomposite (2) avec le dispositif d'évacuation (20) ;
- connexion (55) de ladite au moins une électrode (11, 12) du géocomposite (2) avec ledit générateur électrique (10) ;
- déversement (56) de boues ou résidus sur le géocomposite (2) ;
- connexion (55) de l'autre électrode (12, 11) avec ledit générateur électrique (10).

La connexion (54) peut comporter une pose (541) de tuyaux d'évacuation (3), notamment s'ils ne sont pas prévus dans le bassin (B). Cette connexion (54) peut également comporter une connexion des mini-drains avec les tuyaux d'évacuation (3), lorsque le géocomposite comporte ces mini-drains (23). Cette connexion (54) peut également comporter une connexion des tuyaux d'évacuation (3) au dispositif d'évacuation (20) ou simplement une connexion du ou des géocomposite(s) (2) au dispositif d'évacuation (par exemple par tout dispositif approprié permettant de connecter le géotextile (nappe) avec l'évacuation).

La connexion (55) au générateur (10) comporte une connexion (551) des électrodes (11, 12) au générateur (au moins une électrode à la fois, c'est-à-dire une polarité à la fois). Dans certains modes de réalisation, cette connexion, notamment pour la deuxième électrode qui est intégrée dans un géocomposite, nécessite au préalable une pose (51) d'un second géocomposite (2) selon l'invention dans ledit bassin (B). La connexion (55) de « l'autre électrode» (12, 11) avec ledit générateur électrique (10) correspond à une connexion de « l'électrode de ce second géocomposite (2) ». Ces étapes de connexions (55) au générateur (10) peuvent également comporter une connexion (552) dans le dispositif de protection (13), pour mettre en contact la partie en carbone avec la partie métallique. Ces connexions (55) au générateur (10) peuvent également comporter une connexion (553) aux moyens (14) de commutation, lorsque ceux-ci sont prévus. Dans ce cas, le procédé peut comporter une inversion (57) de polarité, de préférence après une durée déterminée au préalable en fonction de la vitesse d'assèchement de la zone anodique et/ou en fonction de la lyse de l'anode, de façon à optimiser l'efficacité et/ou la durée de vie du système. En effet, en inversant la polarité à un temps approprié, on évite d'assécher trop la zone anodique et on arrive à la réhydrater, ce qui permet de lutter contre l'augmentation de résistivité de ladite zone anodique. Par ailleurs, la corrosion de l'anode est limitée. Le procédé peut donc comporter une succession d'inversions de polarité, déterminées pour optimiser l'assèchement des boues ou résidus.

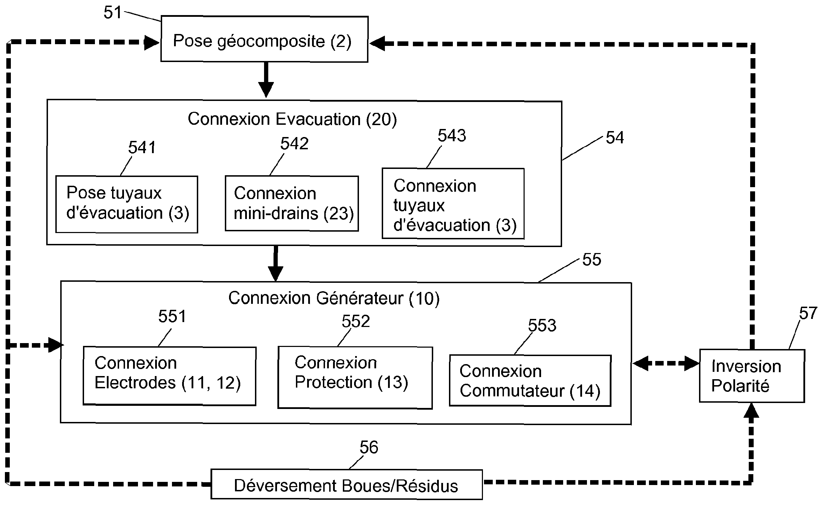

D'autre part, il est connu que la contrainte mécanique exercée sur les boues ou résidus entraine une expulsion du fluide interstitiel. Dans certains modes de réalisation, le système permettra une mise en pression du fluide par l'ajout d'au moins une nouvelle couche de boue, générant des contraintes sur les couches sous-jacentes, permettant ainsi au fluide de s'évacuer et d'accompagner la consolidation du massif dans le bassin. Ainsi, le procédé, par la mise en œuvre répétée d'au moins certaines de ses étapes, comme illustré par les pointillés sur la figure 6, permet d'ajouter des couches successives de boues ou résidus par-dessus les géocomposites et obtenir ainsi une contrainte suffisante aux étages inférieurs pour optimiser l'évacuation des eaux. Le préambule de la présente demande explique d'ailleurs les phénomènes (cf. les horizons de drainage) qui favorisent l'évacuation lors d'une telle augmentation de contrainte, en particulier lorsque des géocomposites sont disposés dans le bassin (B).

Les géocomposites selon divers modes de réalisation décrits dans la présente demande sont particulièrement avantageux par le fait qu'ils comportent des électrodes sensiblement parallèles à des mini-drains, et/ou qu'ils comportent des électrodes comprenant du carbone, notamment des fibres de carbone. Ainsi, un procédé de fabrication de gécomposite pour la consolidation des sols ne faisant pas partie de l'invention est décrit, dans lequel on dispose des mini-drains, de préférence parallèles entre eux, sur une première nappe (filtrante et/ou drainante), et des électrodes sensiblement parallèles à ces mini-drains, puis au moins une seconde nappe (filtrante et/ou drainante) par-dessus la première nappe, les électrodes et les mini-drains. De préférence, on assemble ensuite les nappes par aiguilletage, de manière connue en soi, par exemple comme décrit en page 5, ligne 3 à page 7 ligne 3 de la demande WO2006/030076. Dans certains modes de réalisation, le procédé comporte une étape d'enroulement des électrodes autour des mini-drains avant leur disposition sur la première nappe. Dans certains modes de réalisation, le procédé comporte une étape d'enfilage des électrodes dans les mini-drains. Dans certains modes de réalisation, le procédé comporte une étape de disposition des électrodes le long des mini-drains. Dans certains de ces modes de réalisation, le procédé comporte une étape de préparation des électrodes par intégration de carbone dans les électrodes, de préférence sous la forme de fils à partir de fibres de carbone. D'autre part, dans certains modes de réalisation, on dispose des électrodes comportant du carbone sur une première nappe filtrante et/ou drainante), puis au moins une seconde nappe (filtrante et/ou drainante) par-dessus la première nappe. Dans certains de ces modes de réalisation, le procédé comporte une étape de préparation des électrodes sous la forme de fils à partir de fibres de carbone. Les nappes sont de préférence assemblées entre elles, comme détaillé ci-dessus. Pour les deux types de procédés de fabrication décrits ci-dessus, la préparation des électrodes en fibres de carbone peut comporter un tissage ou un assemblage des fils de carbone pour obtenir des bandes de tissu ou non tissées à intégrer dans le géocomposite.

On notera que l'on réfère ici à un aiguilletage des nappes, mais qu'il existe d'autres méthodes, comme le tricot ou le tissage. Ainsi, divers modes de réalisation des deux types de procédés de fabrication décrits ci-dessus comportent une étape d'assemblage des nappes et/ou des électrodes (en fibres de carbone ou non) par tricotage ou par tissage. Ces méthodes d'assemblage facilitent d'ailleurs la mise en place d'électrodes non parallèles aux mini-drains, alors que l'aiguilletage est particulièrement avantageux pour l'agencement des électrodes parallèlement aux mini-drains, puisque moins complexe et couteux.

## Revendications

1. Géocomposite (2) de traitement des sols, pour un système de traitement des sols par électrocinétique, comprenant au moins une nappe filtrante (21) et/ou au moins une nappe drainante (22), avec des mini-drains perforés (23) intégrés et intégrant au moins une partie d'au moins une électrode disposée selon un trajet sensiblement parallèle aux mini-drains et apte à être connectée à un générateur électrique (10) connecté à une autre électrode.

2. Géocomposite (2) de traitement des sols, selon la revendication 1 **caractérisé en ce qu'**au moins une partie d'au moins une desdites électrodes (11, 12) comporte du carbone sous forme de fibres de carbone.

3. Système de traitement des sols comprenant, d'une part, au moins un générateur électrique (10) et au moins deux électrodes (11, 12) et, d'autre part, au moins un dispositif d'évacuation (20), **caractérisé en ce que** le système comporte au moins un géocomposite (2) selon la revendication 1 ou 2.

4. Système selon la revendication 3, **caractérisé en ce qu'**au moins une partie des deux électrodes (11, 12) comporte du carbone, sous forme de fibres de carbone.

5. Système selon une des revendications 3 à 4, **caractérisé en ce qu'**une seule des deux électrodes (11, 12) possède au moins une partie comportant du carbone tandis que l'autre est métallique.

6. Système selon les revendications 3 à 5, **caractérisé en ce que** les électrodes (11, 12) sont disposées sensiblement parallèlement aux mini-drains et enroulées autour des mini-drains (23) du géocomposite (2).

7. Système selon une des revendications 3 à 6, **caractérisé en ce que** lesdites fibres de carbone desdites électrodes (11, 12) sont agencées sous forme de fils.

8. Système selon la revendication 7, **caractérisé en ce que** les fils de carbone sont cousus sur au moins une nappe (21, 22) du géocomposite (2).

9. Système selon une des revendications 3 à 8, **caractérisé en ce que** les deux électrodes (11, 12) possèdent au moins une partie intégrée dans ou sur des lés distincts de géocomposite (2) disposés à distance l'un de l'autre au sein du sol à traiter.

10. Système selon une des revendications 3 à 9, **caractérisé en ce qu'**il comporte des moyens de commutation (14) pour inverser la polarité des électrodes (11, 12).

11. Système selon une des revendications 3 à 10, **caractérisé en ce que** lesdites électrodes (11, 12) dont au moins une partie comporte des fibres de carbone sont reliées à au moins une partie en métal pour améliorer la distribution du courant du générateur (10) sur de longues distances.

12. Système selon la revendication 11, **caractérisé en ce que** lesdites parties en métal et leurs connexions avec les parties en carbone sont munies de moyens de protection (13) contre la corrosion.

13. Système selon la revendication 12, **caractérisé en ce que** les moyens de protection (13) contre la corrosion comportent des moyens d'isolation étanches à l'eau.

14. Procédé de consolidation de sols, notamment de boues ou résidus, par l'utilisation d'un système selon l'une des revendications 3 à 13, dans un bassin (B) de consolidation, le procédé étant **caractérisé en ce qu'**il comporte :
- pose (51) d'au moins un géocomposite (2) selon l'une des revendications 1 à 2 dans ledit bassin (B) ;
- connexion (54) du géocomposite (2) avec le dispositif d'évacuation (20) ;
- connexion (55) de ladite au moins une électrode (11, 12) du géocomposite (2) avec ledit générateur électrique (10) ;
- déversement (56) de boues ou résidus sur le géocomposite (2) ;
- connexion (55) de l'autre électrode (12, 11) avec ledit générateur électrique (10).

15. Procédé selon la revendication 14, **caractérisé en ce qu'**il comporte une pose (51) d'un second géocomposite (2) selon l'une des revendications 1 à 3 dans ledit bassin (B) et **en ce que** la connexion (55) de l'autre électrode (12, 11) avec ledit générateur électrique (10) correspond à une connexion de l'électrode de ce second géocomposite (2) ; et le procédé comporte une inversion (57) de polarité des électrodes (11, 12), grâce à des moyens (14) de commutation, cette inversion de polarité étant mise en œuvre au bout d'une période déterminée, pour optimiser la durée de vie et/ou l'efficacité du système.

## Patentansprüche

1. Geokomposit (2) zur Bodenbehandlung, für ein elektrokinetisches Bodenbehandlungssystem, das mindestens eine Filterfolie (21) und/oder eine Drainagefolie (22) umfasst, mit integrierten perforierten Mini-Abflüssen (23) und das mindestens einen Teil von mindestens einer Elektrode integriert, die entlang eines Pfades angeordnet ist, der im Wesentlichen parallel zu den Mini-Abflüssen ist, und dazu geeignet ist, mit einem Stromgenerator (10) verbunden zu werden, der mit einer anderen Elektrode verbunden ist.

2. Geokomposit (2) zur Bodenbehandlung nach Anspruch 1, **dadurch gekennzeichnet, dass** mindestens ein Teil mindestens einer der Elektroden (11, 12) Kohlenstoff in Form von Kohlenstofffasern umfasst.

3. Bodenbehandlungssystem umfassend einerseits mindestens einen Stromgenerator (10) und mindestens zwei Elektroden (11, 12) und anderseits mindestens eine Evakuierungsvorrichtung (20), **dadurch gekennzeichnet, dass** das System mindestens ein Geokomposit (2) nach Anspruch 1 oder 2 umfasst.

4. System nach Anspruch 3, **dadurch gekennzeichnet, dass** mindestens ein Teil der zwei Elektroden (11, 12) Kohlenstoff in Form von Kohlenstofffasern umfasst.

5. System nach einem der Ansprüche 3 oder 4, **dadurch gekennzeichnet, dass** eine der zwei Elektroden (11, 12) mindestens ein Teil hat, das Kohlenstoff umfasst, wobei das andere aus Metall ist.

6. System nach den Ansprüchen 3 bis 5, **dadurch gekennzeichnet, dass** die Elektroden (11, 12) im Wesentlichen parallel zu den Mini-Abflüssen angeordnet sind und um die Mini-Abflüsse (23) des Geokomposits (2) gewickelt sind.

7. System nach einem der Ansprüche 3 bis 6, **dadurch gekennzeichnet, dass** die Kohlenstofffasern der Elektroden (11, 12) in Form von Fäden angeordnet sind.

8. System nach Anspruch 7, **dadurch gekennzeichnet, dass** die Kohlenstofffäden mindestens auf einer Folie (21, 22) des Geokomposits (2) genäht sind.

9. System nach einem der Ansprüche 3 bis 8, **dadurch gekennzeichnet, dass** die zwei Elektroden (11, 12) mindestens ein Teil umfassen, das in oder auf separaten Geokompositstreifen integriert ist, die in einem Abstand voneinander innerhalb des zu behandelnden Bodens angeordnet sind.

10. System nach einem der Ansprüche 3 bis 9, **dadurch gekennzeichnet, dass** es Schaltmittel (14) zum Umkehren der Polarität der Elektroden (11, 12) umfasst.

11. System nach einem der Ansprüche 3 bis 10, **dadurch gekennzeichnet, dass** die Elektroden (11, 12), von denen mindestens ein Teil Kohlenstofffasern umfasst, mit mindestens einem Metallteil verbunden sind, um die Verteilung des Stroms des Generators (10) über große Entfernungen zu verbessern.

12. System nach Anspruch 11, **dadurch gekennzeichnet, dass** die Metallteile und ihre Verbindungen zu den Kohlenstoffteilen mit Korrosionsschutzmitteln (13) versehen sind.

13. System nach Anspruch 12, **dadurch gekennzeichnet, dass** die Korrosionsschutzmittel (13) wasserdichte Isoliermittel umfassen.

14. Bodenkonsolidierungsverfahren, insbesondere von Schlamm oder Rückständen, durch die Verwendung eines Systems nach einem der Ansprüche 3 bis 13, in einem Konsolidierungsbecken (B), wobei das Verfahren **dadurch gekennzeichnet ist, dass** es Folgendes umfasst:
- Verlegen (51) mindestens eines Geokomposits (2) nach einem der Ansprüche 1 bis 2 in dem Becken (B);
- Verbinden (54) des Geokomposits (2) mit der Evakuierungsvorrichtung (20);
- Verbinden (55) der mindestens einen Elektrode (11, 12) des Geokomposits (2) mit dem Stromgenerator (10);
- Verschütten (56) von Schlamm oder Rückständen auf dem Geokomposit (2);
- Verbinden (55) der anderen Elektrode (12, 11) mit dem Stromgenerator (10).

15. Verfahren nach Anspruch 14, **dadurch gekennzeichnet, dass** es ein Verlegen (51) eines zweiten Geokomposits (2) nach einem der Ansprüche 1 bis 3 in dem Becken (B) umfasst, und dass das Verbinden (55) der anderen Elektrode (12, 11) mit dem Stromgenerator (10) einem Verbinden der Elektrode des zweiten Geokomposits (2) entspricht; wobei das Verfahren ein Umkehren (57) der Polarität der Elektroden (11, 12) mittels Schaltmittel (14) umfasst, wobei das Umkehren der Polarität am Ende eines bestimmten Zeitraums ausgeführt wird, um die Lebensdauer und/oder die Effizienz des System zu optimieren.

## Claims

1. Geocomposite (2) for the treatment of soils, for a system for the treatment of soils by electrokinetics, comprising at least one filter mat (21) and/or at least one drainage mat (22), having integrated perforated minidrains and integrating at least one part of at least one electrode disposed along a path substantially parallel to the minidrains and capable of being connected to an electric generator (10) connected to another electrode.

2. Geocomposite (2) for the treatment of soils according to claim 1, **characterised in that** at least one part of at least one of said electrodes (11, 12) comprises carbon in the form of carbon fibres.

3. System for the treatment of soils comprising, on the one hand, at least one electric generator (10) and at least two electrodes (11, 12) and, on the other hand, at least one drainage device (20), **characterised in that** the system comprises at least one geocomposite (2) according to claim 1 or 2.

4. System according to claim 3, **characterised in that** at least one part of the two electrodes (11, 12) comprises carbon, in the form of carbon fibres.

5. System according to one of claims 3 to 4, **characterised in that** only one of the two electrodes (11, 12) has at least one part comprising carbon, while the other is metallic.

6. System according to claims 3 to 5, **characterised in that** the electrodes (11, 12) are disposed substantially parallel to the minidrains and wound around the minidrains (23) of the geocomposite (2).

7. System according to one of claims 3 to 6, **characterised in that** said carbon fibres of said electrodes (11, 12) are arranged in the form of threads.

8. System according to claim 7, **characterised in that** the carbon threads are stitched onto at least one mat (21, 22) of the geocomposite (2).

9. System according to one of claims 3 to 8, **characterised in that** the two electrodes (11, 12) have at least one part integrated in or on separate strips of geocomposite (2) disposed at a distance from each other within the soil to be treated.

10. System according to one of claims 3 to 9, **characterised in that** it comprises switching means (14) for reversing the polarity of the electrodes (11, 12).

11. System according to one of claims 3 to 10, **characterised in that** said electrodes (11, 12) of which at least one part comprises carbon fibres are connected to at least one metal part in order to improve distribution of the current of the generator (10) over long distances.

12. System according to claim 11, **characterised in that** said metal parts and their connections to the carbon parts are provided with means of protection (13) against corrosion.

13. System according to claim 12, **characterised in that** the means of protection (13) against corrosion comprise watertight isolation means.

14. Method for the consolidation of soils, in particular sludge or tailings, by the use of a system according to one of claims 3 to 13, in a consolidation pond (B), the method being **characterised in that** it comprises:
- laying (51) of at least one geocomposite (2) according to one of claims 1 to 2 in said pond (B);
- connection (54) of the geocomposite (2) to the drainage device (20);
- connection (55) of said at least one electrode (11, 12) of the geocomposite (2) to said electric generator (10);
- pouring (56) of sludge or tailings onto the geocomposite (2);
- connection (55) of the other electrode (12, 11) with said electric generator (10).

15. Method according to claim 14, **characterised in that** it comprises a laying (51) of a second geocomposite (2) according to one of claims 1 to 3 in said pond (B) and **in that** the connection (55) of the other electrode (12, 11) with said electric generator (10) corresponds to a connection of the electrode of this second geocomposite (2); and the method comprises a reversal (57) of polarity of the electrodes (11, 12), owing to switching means (14), this reversal of polarity being carried out at the end of a given period, in order to optimise the length of life and/or efficiency of the system.
